(19) Europäisches Patentamt
European Patent Office
Office européen des brevets

(11) **EP 4 617 632 A1**

(12) **EUROPEAN PATENT APPLICATION**
published in accordance with Art. 153(4) EPC

(43) Date of publication:
**17.09.2025 Bulletin 2025/38**

(21) Application number: **23907263.0**

(22) Date of filing: **17.07.2023**

(51) International Patent Classification (IPC):
*G01K 15/00* (2006.01)     *G01K 3/10* (2006.01)
*G01K 1/14* (2021.01)      *G01M 99/00* (2011.01)
*H01M 10/48* (2006.01)

(52) Cooperative Patent Classification (CPC):
**G01K 1/14; G01K 3/10; G01K 15/00; G01M 99/00;
H01M 10/48**

(86) International application number:
**PCT/KR2023/010225**

(87) International publication number:
**WO 2024/135971 (27.06.2024 Gazette 2024/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **23.12.2022 KR 20220183190**

(71) Applicant: **LG Energy Solution, Ltd.
Seoul 07335 (KR)**

(72) Inventor: **LEE, Ho Jun
Daejeon 34122 (KR)**

(74) Representative: **Plasseraud IP
104 Rue de Richelieu
CS92104
75080 Paris Cedex 02 (FR)**

(54) **SENSOR DIAGNOSIS METHOD AND APPARATUS THEREFOR**

(57)     The present invention proposes a method for diagnosing a sensor and an apparatus therefor, wherein the method includes acquiring a reference thermal time constant from a temperature sensor mounted on at least one reference battery module, acquiring a current thermal time constant from a temperature sensor mounted on at least one battery module by using a first temperature of a first point of time at which discharge is terminated from a battery of an eco-friendly vehicle, a second temperature at a second point of time at which the discharge is initiated, and time between the first and second points of time, and comparing the reference thermal time constant with the current thermal time constant and then determining whether the temperature sensor is mounted poorly based on the result of the comparison.

Fig. 5

EP 4 617 632 A1

Description

## TECHNICAL FIELD

The present invention relates to a sensor diagnosis apparatus and a sensor diagnosis method, and particularly to, a sensor diagnosis method capable of diagnosing the mounting state of a temperature sensor of a battery pack, and an apparatus therefor.

## BACKGROUND ART

A chargeable and dischargeable secondary battery, that is, a battery, is widely used as an energy source of a mobile device such as a smart phone. In addition, a battery is also used as an energy source of an eco-friendly vehicle, such as an electric vehicle and a hybrid electric vehicle, which are proposed as a solution to air pollution and the like caused by gasoline cars, diesel cars, and the like, which use fossil fuels. The types of applications in which a battery is used are becoming very diverse, and it is expected that the battery will be applied to more fields and products in the future than now.

Currently, commercially available batteries include nickel-cadmium batteries, nickel-hydrogen batteries, nickel-zinc batteries, lithium-ion batteries, etc., among which the lithium-ion batteries have little memory effect compared to nickel-based batteries, and thus, are freely charged and discharged, have a very low self-discharge rate, and a high energy density. In addition, the lithium-ion batteries can be manufactured in a small and lightweight manner, and thus, are used as a power source for mobile devices, and the range of use thereof has been expanded to a power source for electric vehicles, attracting attention as a next-generation energy storage medium.

Such a battery is generally used in the form of a battery pack rather than being used as a single battery cell. The battery pack includes at least one battery module, and the battery module may be composed of a plurality of battery cells. In addition, the battery includes a battery management system (BMS) which manages the overall state of the battery cell, the battery module, or the battery pack.

Meanwhile, a temperature sensor is installed in the battery pack to measure the temperature of each battery module, and the state of the battery module may be diagnosed by using a measured value of the corresponding temperature sensor. That is, at least one temperature sensor is mounted on each of the plurality of battery modules, and the state of the battery module is diagnosed using a temperature measurement value of the battery module measured from the temperature sensor.

However, if a temperature sensor is not properly mounted on a battery module, or is mounted at a wrong position, the temperature of the battery module may not be accurately measured. That is, if a temperature sensor is incorrectly mounted, the temperature of a battery module may not be accurately measured, which accordingly affects a temperature-related diagnosis, so that the corresponding diagnosis may not be made in a timely manner. Such a situation may affect the lifespan and performance of a battery and even create a dangerous situation for a driver of a vehicle.

Typically, in order to diagnose a temperature sensor, a method of comparing the median value of all temperature sensor values including short to GND and short to VCC with each sensor value has been used. However, such a diagnosis method has a disadvantage in that the malfunction of a sensor may be diagnosed, but not the mounting status and the like of a temperature sensor.

With regard to the prior art, there is the following prior art.

Korean Patent Laid-open Publication No. 10-2003-0005954

## DISCLOSURE OF THE INVENTION

## TECHNICAL PROBLEM

The present invention provides a sensor diagnosis method and an apparatus therefor, wherein the method is capable of diagnosing the mounting state of a temperature sensor mounted on each of a plurality of battery modules.

The present invention provides a sensor diagnosis method and an apparatus therefor, wherein the method is capable of diagnosing the state of a temperature sensor by using a thermal time constant value, thereby diagnosing the mounting state of the temperature sensor.

## TECHNICAL SOLUTION

According to an exemplary embodiment of the present invention, a method for diagnosing a sensor includes acquiring a reference thermal time constant from a temperature sensor mounted on at least one reference battery module, acquiring a current thermal time constant from a temperature sensor mounted on at least one battery module by using a first temperature of a first point of time at which discharge is terminated from a battery of an eco-friendly vehicle, a second temperature at a second point of time at which the discharge is initiated, and time between the first and second points of time, and comparing the reference thermal time constant with the current thermal time constant and then determining whether the temperature sensor is mounted poorly based on the result of the comparison.

The reference thermal time constant is acquired by conducting a thermal insulation test on at least one reference battery module on which a temperature sensor is mounted and which has been confirmed to be good.

The thermal insulation test is conducted by measuring the time taken for a first temperature of the reference battery module to reach a predetermined second temperature while the reference battery module on which the temperature sensor is mounted is insulated with an insulation material.

The reference thermal time constant is acquired by the following equation by using the first temperature of the reference battery module, the second temperature thereof, and the time taken for the first temperature to reach the second temperature.

$$T = (T1 - Te)exp\left(-\frac{t}{\tau}\right) + Te$$

Here, $\tau$ is a thermal time constant, T1 is a first temperature, Te is a second temperature, t is time taken for the first temperature to reach 63.2% of the second temperature, and T is the temperature at the time t.

The current thermal time constant is acquired by the following equation by using the first temperature of the first point of time at which the discharge is terminated, the second temperature of the second point of time at which the discharge is initiated, and the time between the first and second points of time.

$$T = (T1 - Te)exp\left(-\frac{t}{\tau}\right) + Te$$

Here, $\tau$ is a thermal time constant, T1 is a first temperature of a first point of time, Te is a second temperature of a second point of time, t is time taken for the first temperature to reach 63.2% of the second temperature, and T is the temperature at the time t.

When the current thermal time constant is out of a predetermined threshold range of the reference thermal time constant, it is determined that that the temperature sensor is mounted poorly.

According to another exemplary embodiment of the present invention, an apparatus for diagnosing a sensor includes a memory unit configured to store a reference thermal time constant obtained from a temperature sensor mounted on at least one battery module, a thermal time constant acquisition unit configured to acquire a current thermal time constant from a temperature sensor mounted on at least one battery module by using a first temperature of a first point of time at which discharge is terminated from a battery of an eco-friendly vehicle, a second temperature at a second point of time at which the discharge is initiated, and time between the first and second points of time, and a comparative determination unit configured to compare the reference thermal time constant with the current thermal time constant and then determine whether the temperature sensor is mounted poorly based on the result of the comparison.

The reference thermal time constant is acquired by conducting a thermal insulation test on at least one reference battery module on which a temperature sensor is mounted and which has been confirmed to be good.

The thermal insulation test is conducted by measuring the time taken for a first temperature of the reference battery module to reach a predetermined second temperature while the reference battery module on which the temperature sensor is mounted is insulated with an insulation material.

The reference thermal time constant is acquired by the following equation by using the first temperature of the reference battery module, the second temperature thereof, and the time taken for the first temperature to reach the second temperature.

$$T = (T1 - Te)exp\left(-\frac{t}{\tau}\right) + Te$$

Here, $\tau$ is a thermal time constant, T1 is a first temperature, Te is a second temperature, t is time taken for the first temperature to reach 63.2% of the second temperature, and T is the temperature at the time t.

The thermal time constant acquisition unit acquires the current thermal time constant by the following equation by using the first temperature of the first point of time at which the discharge is terminated, the second temperature of the second point of time at which the discharge is initiated, and the time between the first and second points of time.

$$T = (T1 - Te)exp\left(-\frac{t}{\tau}\right) + Te$$

Here, $\tau$ is a thermal time constant, T1 is a first temperature of a first point of time, Te is a second temperature of a second point of time, t is time taken for the first temperature to reach 63.2% of the second temperature, and T is the temperature at the time t.

When the current thermal time constant is out of a predetermined threshold range of the reference thermal time constant, the comparative determination unit determines that the temperature sensor is mounted poorly.

## ADVANTAGEOUS EFFECTS

A sensor diagnosis apparatus and a sensor diagnosis method according to embodiments of the present invention may diagnose the mounting state of a temperature sensor by using the thermal time constant of the temperature sensor. That is, after a threshold range is set from a reference thermal time constant and a current thermal time constant is acquired, the two constants are compared, and then the mounting failure of a temperature sensor may be diagnosed. At this time, when the current thermal time constant is out of the threshold range of the reference thermal time constant, it may be determined that the temperature sensor is not properly mounted on a battery module. Meanwhile, the reference thermal time constant may be acquired by using a thermal insulation test and a thermal time constant equation for a temperature sensor mounted on a battery module which has been confirmed to be good. In addition, the current thermal time constant may be acquired by substituting a temperature at the time of parking a car, a temperature at the time of starting the car, and parking time into the thermal time constant equation.

Therefore, the present invention is capable of diagnosing the mounting state of a battery module of a temperature sensor by using a thermal time constant, and thus, may prevent adverse effects on the lifespan and performance of a battery and furthermore, may prevent a dangerous situation which may occur to a driver.

## BRIEF DESCRIPTION OF THE DRAWINGS

FIG. 1 is a block diagram for describing the main configuration of an eco-friendly vehicle according to an embodiment of the present invention.
FIG. 2 is a block diagram for describing the configuration of a sensor diagnosis apparatus according to an embodiment of the present invention.
FIG. 3 is a block diagram for describing a detailed configuration of a sensor diagnosis apparatus according to an embodiment of the present invention.
FIG. 4 is a graph illustrating the temperature change of a battery pack according to the parking and starting of an eco-friendly vehicle.
FIG. 5 is a flowchart for describing a method for diagnosing a sensor according to an embodiment of the present invention.

## MODE FOR CARRYING OUT THE INVENTION

Hereinafter, embodiments of the present invention will be described in detail with reference to the accompanying drawings. However, the present invention is not limited to the embodiments disclosed below, but will be implemented in various forms different from each other, and the embodiments are merely to complete the disclosure of the present invention, and are provided to fully convey the scope of the present invention to those skilled in the art.

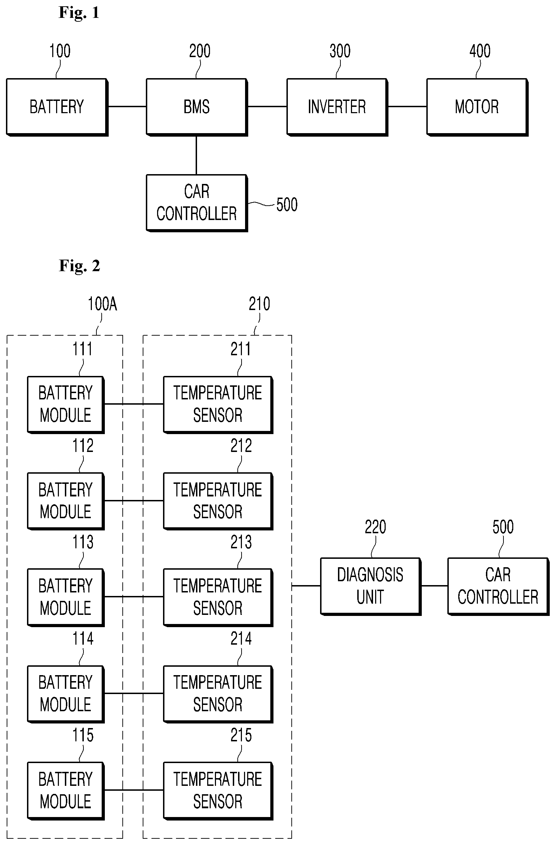

FIG. 1 is a block diagram for describing the main configuration of an eco-friendly vehicle according to an embodiment of the present invention.

Referring to FIG. 1, the eco-friendly vehicle according to an embodiment of the present invention includes a battery 100 which is chargeable and dischargeable and which provides electric energy for driving an vehicle, and a battery management system (BMS) 200 which manages the battery 100, an inverter 300 for allowing the battery 100 to be charged or discharged, a motor 400 for driving an eco-friendly vehicle by driving wheels according to electricity from the battery 100, and a car controller 500 for transmitting a status signal of an eco-friendly vehicle to the BMS 200. The eco-friendly vehicle will be described in more detail for each component as follows.

1. Battery

The battery 100 is chargeable and dischargeable, and is an electric energy source for providing energy to an eco-friendly vehicle, thereby driving the eco-friendly vehicle. Here, the battery 100 may include at least one battery pack. In addition, at least one battery pack may include a plurality of battery modules, and the battery module may include a plurality of chargeable and dischargeable battery cells. That is, the battery 100 includes a plurality of battery cells, and the plurality of battery cells may be grouped into a predetermined unit to form a battery module, and a plurality of the battery modules may form one battery pack. Meanwhile, the plurality of battery cells may be connected in series and/or parallel in various ways to meet the specifications of eco-friendly vehicles. A plurality of battery packs, each including a plurality of battery cells, may also be connected in series and/or parallel. Here, a battery cell may include a lithium-ion battery. However, the battery cell may be configured as not only a lithium ion battery, but also a lithium polymer battery, a nickel cadmium battery, a nickel hydrogen battery, a nickel zinc battery, or the like.

2. Battery management system (BMS)

The BMS 200 estimates the state of the battery 100, and manages the battery 100 by using information on the estimated state. For example, the BMS 200 measures the state of the battery 100, such as the voltage, current, and temperature thereof, and uses information on the state to estimate the state of charge (SOC), state of health (SOH), and state of power (SOP). The SOC represents the remaining capacity of a battery, and accurate prediction of the SOC makes it possible to predict future mileage. The SOH represents the capacity of a battery, and refers to the aging state of the battery which affects the number of times the battery is charged and discharged. The SOP refers to the maximum power that a battery can support. The prediction of the maximum power helps to prevent over-charge or heat loss of the battery. Using such information on the state, the BMS 200 controls the charge or discharge of the battery 100.

In addition, in order to manage the battery 100 using the BMS 200, a sensing unit configured to sense the state of the battery 100 may be further included. The sensing unit may include a current sensor configured to sense a current of the battery 100, a voltage sensor configured to sense a voltage, and a temperature sensor configured to sense a temperature. At least one of each of the current sensor, the voltage sensor, and the temperature sensor may be provided. Here, the temperature sensor may be provided by being mounted on each of the plurality of battery modules. That is, the temperature sensor is mounted on each battery module, and a plurality of the battery modules are collectively cased in a pack case to form a battery pack, so that the temperature sensor is physically provided inside the battery pack. However, since the BMS 200 diagnoses the state of the battery 100 by using a temperature measurement value of a battery module, a temperature sensor mounted on the battery module may be considered a part of the BMS 200 from a functional point of view. In other words, a temperature sensor is mounted on a battery module and forms a battery pack, and thus, may be physically a part of the battery pack, but since the BMS 200 diagnoses the state of the battery 100 using a temperature measurement, the temperature sensor may be functionally a part of the BMS 200. Accordingly, in the present invention, a temperature sensor as a part of the BMS 200 will be described as a component constituting a sensing unit.

In addition, the BMS 200 includes a charge and discharge control device. The charge and discharge control device is provided between current paths of the battery 100 and an external power source or a power consumption device, that is, a motor, to control the charge and discharge of the battery 100.

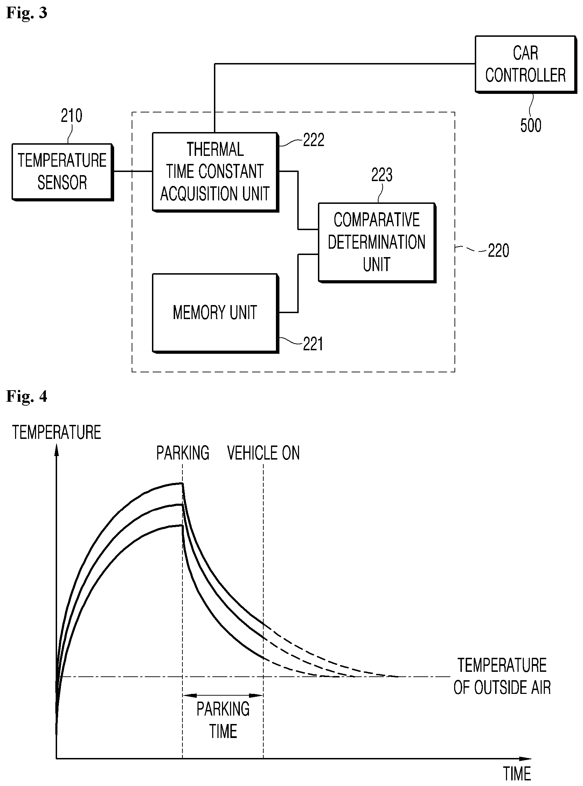

Meanwhile, the BMS 200 may include a sensor diagnosis apparatus according to an embodiment of the present invention. That is, the sensor diagnosis apparatus according to an embodiment of the present invention may be provided in the BMS 200. The sensor diagnosis apparatus according to the present invention diagnoses the mounting state of a temperature sensor by using the thermal time constant of a sensor. To this end, the present invention obtains a thermal time constant, that is, a reference thermal time constant, of a temperature sensor mounted on each of a plurality of battery modules which have been confirmed to be good, and obtains a current thermal time constant of a temperature sensor mounted on a battery module, and then compares the current thermal time constant with the reference thermal time constant to diagnose the mounting state of the temperature sensor. The sensor diagnosis apparatus according to an embodiment of the present invention will be described later with reference to FIG. 3.

3. Inverter

The inverter 300 drives the motor 400 to enable an eco-friendly vehicle to be driven. That is, the inverter 300 converts DC power of the battery 100 into AC power to be used for the motor 400, maintains accurate charging, and affects the rotational speed and torque control of the motor 400. Although an eco-friendly vehicle using a direct current motor does not require an inverter, in order to use a high-performance AC motor, an inverter capable of freely changing a frequency, a voltage, a number of rotations, and a torque is indispensable.

4. Motor

The motor 400 may provide driving power to an eco-friendly vehicle. That is, the motor 400 may use energy supplied from the battery 100 through the invertor 300 to provide wheel driving force for the eco-friendly vehicle to move. The motor 400 may be composed of, for example, at least one of an induction motor, a permanent magnet synchronous motor, or a reluctance motor. Meanwhile, the eco-friendly vehicle may further include a motor controller for controlling the motor 400. The motor controller detects the operational amount and speed of an accelerator pedal to control the torque and rotational speed of the motor 400 according to conditions such as a vehicle speed, a load, or the like so as to obtain an intended torque change therefrom. In a DC motor, the current controls the torque and the voltage controls the speed, and in an AC motor, the amplitude controls the torque and the frequency controls the speed.

5. Car controller

The car controller 500 transmits a signal related to the state of the eco-friendly vehicle to the BMS 200 via a wired network and/or a wireless network. The BMS 200 may control the inverter 300 in response to a signal from the car controller 500.

Meanwhile, although not illustrated, the eco-friendly vehicle may further include a regenerative power generation device, an electronic component, and the like. The regenerative power generation device (not shown) may be provided to reduce the energy consumption of eco-friendly vehicle. In the eco-friendly vehicle, the motor 400 has the same structure as a generator, and thus, rotates when an electric current is applied thereto, and becomes a generator when rotated by a force applied from the outside. When deceleration is executed by operating a brake while the eco-friendly vehicle is being driven, inertial force to continue the driving is generated in the vehicle, so that the motor 400 is reversely driven by the inertial force and operated as a generator to generate electricity, which is referred to as regenerative power generation. In addition, when the vehicle is being braked, a portion of the braking force is used for electricity generation, and the generated electrical energy is either charged to the battery 100 or consumed by an electronic component, and a portion of the kinetic energy generated by the driving speed of the vehicle is used as energy necessary for driving the generator.

The electronic component (not shown) may include an electric and electronic component driven by electricity among components constituting the eco-friendly vehicle. For example, the electronic component may be a light necessary for driving, a lighting system, an instrument system (cluster) that comprehensively provides information necessary for driving and operation, an airbag system that protects the body of a passenger in the event of a collision, a body control system (BCS) that provides various driving convenience and information to a driver, an AQS system that automatically purifies the air inside a vehicle, an automatic air conditioning control system that automatically controls the temperature and humidity inside the vehicle, a back warning system (BWS) that identifies and warns of a rear object when reversing the vehicle, or the like. In addition, examples of various electronic components may include a security system for preventing vehicle theft, a Before Service Warning System (BSWS) that detects the state of a vehicle and provides a driver preventive maintenance information, and the like.

FIG. 2 is a block diagram for describing the configuration of a sensor diagnosis apparatus according to an embodiment of the present invention, and is a block diagram of a sensor diagnosis apparatus for diagnosing the mounting state of a temperature sensor mounted on each of a plurality of battery modules. In addition, FIG. 3 is a block diagram for describing a detailed configuration of a sensor diagnosis apparatus according to an embodiment of the present invention. The sensor diagnosis apparatus according to the present invention diagnoses the mounting state of a temperature sensor by using the thermal time constant of a sensor. That is, the present invention obtains a thermal time constant, that is, a reference thermal time constant, of a temperature sensor mounted on each of a plurality of battery modules which have been confirmed to be good, and obtains a current thermal time constant of a temperature sensor mounted on a battery module mounted on an eco-friendly vehicle, and then compares the current thermal time constant with the reference thermal time constant to diagnose the mounting state of the temperature sensor. At this time, the reference thermal time constant is acquired by conducting a thermal insulation test on a temperature sensor, and the current thermal time constant is acquired from a temperature measured during the driving of the eco-friendly vehicle. In addition, the current thermal constant may be acquired by using the temperature at the time of parking the eco-friendly vehicle (that is, the temperature at the time of turning off the engine), the temperature at the time of starting the engine to drive the eco-friendly vehicle, and parking time.

Referring to FIG. 2, the sensor diagnosis apparatus according to an embodiment of the present invention diagnoses the mounting state of a plurality of temperature sensors 211, 212, 213, 214, 215; 210 respectively mounted on a plurality of battery modules 111, 112, 113, 114, 115; 110 which constitute a battery pack 100A, and to this end, a diagnosis unit 220 is provided. That is, the diagnosis unit 220 diagnoses the mounting state of the plurality of temperature sensors 210. Here, the diagnosis unit 220 may be provided inside the BMS 200. In addition, the diagnosis unit 220 receives the temperature of each of the battery modules 110 measured from the plurality of temperature sensors 210, and is connected to the car controller 500 to be provided with a signal related to the state of the eco-friendly vehicle via a wired network and/or a wireless network. That is, the diagnosis unit 220 uses the temperature at the time of parking a car, the temperature at the time of starting the engine to operate the car, parking time, and the like to calculate a current thermal time constant so as to diagnose the mounting state of a temperature sensor, and may be provided with such information from the car controller 500.

The diagnosis unit 220 diagnoses the mounting state of a temperature sensor by comparing the reference thermal time constant with the current thermal time constant as described above. To this end, the diagnosis unit 220 is required to acquire each of the reference thermal time constant and the current thermal time constant, and compare the reference thermal time constant with the current thermal time constant. To this end, the diagnosis unit 220 may include a memory unit 221 configured to store the reference thermal time constant, a thermal time constant acquisition unit 222 configured to acquire the current thermal time constant, and a comparative determination unit 223 configured to compare the reference thermal time constant with the current thermal time constant so as to determine the mounting state of the temperature sensor. A detailed configuration of the sensor diagnosis apparatus according to an embodiment of the present invention will be described in more detail with reference to FIG. 3 as follows.

2.1. Memory unit

The memory unit 221 stores the reference thermal time constant. That is, the reference thermal time constant may be acquired in advance and stored in the memory unit 221. In order to acquire the reference thermal time constant, a temperature sensor mounted on a battery module confirmed to be good may be used. Here, the battery module confirmed to be good may be a battery module in which an accurately operating temperature sensor is accurately installed at an installation position of the battery module. In addition, the reference thermal time constant may be acquired by conducting a thermal insulation test.

The thermal insulation test for acquiring the reference thermal time constant may be conducted by the following method as a search for thermal resistance to the surroundings. First, a good battery module on which a temperature sensor is mounted at an accurate position is thermally insulated with a thermal insulation material. Then, the battery module thermally insulated with the thermal insulation material is covered with, for example, a paper box. Accordingly, a predetermined space is present between the paper box and the battery module thermally insulated with the thermal insulation material according to the size of the paper box, and air remains in the space. Then, the battery module and the paper box covering the battery module are charged into a climate chamber. At this time, the battery module thermally insulated with the thermal insulation material may be set to an initial temperature of 45 °C, and the temperature inside the climate chamber may be maintained at 25 °C. Then, a thermal time constant is acquired after waiting until the temperature of the thermally insulated battery module is stabilized to an ambient temperature, that is, the temperature (25 °C) of the climate chamber.

Meanwhile, a thermal time constant $\tau$ is an integer indicating how quickly a resistance value changes in response to a rapid change in the ambient temperature of a temperature sensor, for example, a thermistor, or to a rapid change in the current flowing through the temperature sensor, and the less the heat capacity for the change in the ambient conditions, the faster the response, and the shorter the thermal time constant $\tau$. The thermal time constant of a temperature sensor refers to time t required until the temperature of the temperature sensor changes from an initial temperature by 63.2% of the difference between a first temperature, that is, an initial temperature T1, and a second temperature, that is, a final temperature Te. That is, the thermal time constant refers to the time t required to reach 63.2% of the final temperature Te from the initial temperature T1. A temperature T at this time expressed as an equation is the same as Equation 1.

[Equation 1]

$$T = (T1 - Te)exp\left(-\frac{t}{\tau}\right) + Te$$

Here, $\tau$ is a thermal time constant, T1 is a first temperature, Te is a second temperature, t is time taken for the first temperature to reach 63.2% of the second temperature, and T is the temperature at the time t. The thermal time constant $\tau$ has a relationship of $\tau = C/\delta$ between a heat capacity C of a temperature sensor and a heat dissipation constant $\delta$. When t and $\tau$ are the same in [Equation 1], [Equation 1] may be represented by Equation 2.

[Equation 2]

$$\frac{(T - Te)}{T1 - Te} = \frac{1}{e} = \frac{1}{2.718} = 1 - 0.632$$

In addition, [Equation 2] may be then represented by [Equation 3], and [Equation 3] may be represented by [Equation 4].

[Equation 3]

$$T - Te = (T1 - Te)(1 - 0.632)$$

[Equation 4]

$$T = -0.632(T1 - Te) + T1$$

That is, the temperature T at the time of reaching 63.2% of the final temperature Te from the initial temperature T1 may be obtained by multiplying the difference between the initial temperature T1 and the final temperature Te by -0.632 and then adding the initial temperature T1 thereto.

By using the thermal insulation test and the thermal constant acquisition equation described above, the thermal time constant of a temperature sensor mounted on at least one battery module confirmed to be good may be acquired and stored in the memory unit 221 as a reference thermal time constant. Meanwhile, the reference thermal time constant may be acquired from one temperature sensor or may be acquired from two or more temperature sensors. In order to acquire the reference thermal time constant from a plurality of temperature sensors, the thermal time constant of each of the plurality of temperature sensors may be acquired and then divided by the number of the temperature sensors to obtain an average. Even when the thermal time constant is obtained from a plurality of temperature sensors, the above-described method in which a battery pack confirmed to be good is thermally insulated with a thermal insulation material, covered with a paper box, and then charged into a climate chamber may be used. Meanwhile, the thermal insulation test for acquiring a thermal time constant may be conducted on a plurality of battery modules. The thermal time constant may be acquired from a plurality of temperature sensors in various ways as described above, and stored in the memory unit 221 as the reference thermal time constant.

Meanwhile, the memory unit 221 may be provided inside the BMS 200, or may be separately provided in addition to the BMS 200. As the memory unit 221, a non-volatile memory such as a hard disk drive, a flash memory, an electrically erasable programmable read-only memory (EEPROM), a static RAM (SRAM), a ferro-electric RAM (FRAM), a phase-change RAM (PRAM), a magnetic RAM (MRAM), or the like may be used.

2.2. Thermal time constant acquisition unit

The thermal time constant acquisition unit 222 acquires the thermal time constant of a temperature sensor mounted on a current battery module. That is, the thermal time constant acquisition unit 222 acquires a current thermal time constant, and the current thermal time constant is a thermal time constant of a temperature sensor mounted on a battery module of an eco-friendly vehicle. In order to acquire the current thermal time constant, the temperature at the time of parking a car, the temperature at the time of starting the engine to operate the car, parking time, and the like are used.

While a vehicle is being driven, a battery pack discharges, so that the temperature of the battery pack increases. When the discharge of a battery is stopped while the temperature of the battery pack is increasing, for example, when the vehicle is parked and then the engine is turned off, the temperature of the battery pack decreases from then on. The temperature change of the battery pack according to the parking and starting of such an eco-friendly vehicle is shown in FIG. 4. The temperature of the battery pack decreases as the time during which the battery does not discharge, that is, the parking time, increases, and remains constant after a predetermine period of time. That is, when the parking time is over a predetermined period of time, the temperature of the battery pack becomes equal to the temperature of the outside air. In addition, when the vehicle is started and driven, the temperature of the battery pack increases as the battery pack discharges.

In order to acquire the current thermal time constant, the thermal time constant acquisition unit 222 uses the temperature at the time of parking a car, the temperature at the time of starting the engine to operate the car, parking time, and the like. That is, the thermal time constant acquisition unit 222 acquires a current thermal time constant from a temperature sensor mounted on at least one battery module by using a first temperature of a first point of time at which discharge is terminated from a battery of the eco-friendly vehicle, a second temperature at a second point of time at which the discharge is initiated, and time between the first and second points of time. At this time, a method for obtaining a thermal time constant using Equations 1 to 4 may be used to acquire the current thermal time constant. That is, the thermal time constant refers to the time t required to reach 63.2% of the final temperature Te from the initial temperature T1, and if this is applied to the current thermal time constant, the initial temperature T1 is the temperature at the time of parking and the final temperature Te is the temperature at the time of starting the engine, so that the current thermal time constant may be calculated by calculating the time t required reach 63.2% of the temperature at the time of starting the engine from the temperature at the time of parking.

In order to calculate the current thermal time constant, the temperature of a battery module at the time of parking and the temperature of the battery module at the time of starting the engine may be acquired from a temperature sensor mounted on the battery module. In addition, the parking time is the difference in time between the time at which the engine is turned off to the time at which the engine is turned on, which can be obtained from a car controller.

2.3. Comparative determination unit

The comparative determination unit 223 may diagnose the mounting state of a temperature sensor by using the reference thermal time constant and the current thermal time constant. To this end, the comparative determination unit 223 may compare the reference thermal time constant with the current thermal time constant to determine whether the two are the same. That is, the comparative determination unit 223 retrieves the reference thermal time constant from the memory unit 221 and receives the current thermal time constant from the thermal time constant acquisition unit 222 to compare the reference thermal time constant with the current thermal time constant. When the current thermal time constant is not equal to the reference thermal time constant, the comparative determination unit 223 may determine that the temperature sensor is mounted poorly. Meanwhile, a thermal time constant $\tau$ is an integer indicating how quickly a resistance value changes in response to a rapid change in the ambient temperature of a temperature sensor, for example, a thermistor, or to a rapid change in the current flowing through the temperature sensor, and the less the heat capacity for the change in the ambient conditions, the faster the response, and the shorter the thermal time constant $\tau$, and such a change may occur due to a change in the surrounding environment or the installation of a temperature sensor. Since the current thermal time constant may vary depending on the temperature of the outside air, the comparative determination unit 223 sets a predetermined threshold range from the reference thermal time constant, and when the threshold range is set from the reference thermal time constant, and the current thermal time constant is changed to a degree of being out of the threshold range, the comparative determination unit 223 may determine that the temperature sensor is mounted poorly.

As described above, the sensor diagnosis apparatus according to an embodiment of the present invention may diagnose the mounting state of a temperature sensor by using a thermal time constant of the temperature sensor. That is, after a threshold range is set from a reference thermal time constant and a current thermal time constant is acquired, the two constants are compared, and then the mounting failure of a temperature sensor may be diagnosed. The reference thermal time constant may be acquired by using a thermal insulation test and a thermal time constant equation for a temperature sensor mounted on a battery module which has been confirmed to be good. In addition, the current thermal time constant may be acquired by substituting a temperature at the time of parking a car, a temperature at the time of starting the car, and parking time into the thermal time constant equation. In addition, when the current thermal time constant is out of the threshold range of the reference thermal time constant, it may be determined that the temperature sensor is not properly mounted on a battery module. Therefore, the present invention is capable of diagnosing the mounting state of a battery module of a temperature sensor by using a thermal time constant, and thus, may prevent adverse effects on the lifespan and performance of a battery and furthermore, may prevent a dangerous situation which may occur to a driver.

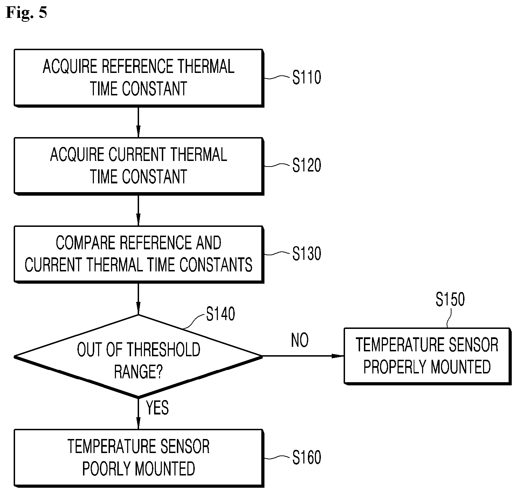

FIG. 5 is a flowchart for describing a method for diagnosing a sensor according to an embodiment of the present invention, and is a flowchart for describing a method for diagnosing the mounting state of a temperature sensor of a battery pack by using a thermal time constant.

Referring to FIG. 5, the sensor diagnosis method according to an embodiment of the present invention may include acquiring a reference thermal time constant from a battery module confirmed to be good S110, acquiring a current thermal time constant from a battery module mounted on an eco-friendly vehicle S120, comparing the reference thermal time constant with the current thermal time constant S130, determining whether the current thermal time constant is out of a threshold range of the reference thermal time constant S140, determining that a temperature sensor is properly mounted if the current thermal time constant is not out of the threshold range S150, and determining that the temperature sensor is poorly mounted if the current thermal time constant is out of the threshold range S160. The method for diagnosing a temperature sensor according to an embodiment of the present invention will be described in detail for each process as follows.

S110 : A reference thermal time constant is acquired in advance and stored in a memory unit 221. In order to acquire the reference thermal time constant, a temperature sensor mounted on a battery module confirmed to be good may be used. Here, the battery module confirmed to be good may be a battery module in which an accurately operating temperature sensor is accurately installed at an installation position of the battery module. In addition, the reference thermal time constant may be acquired by conducting a thermal insulation test.

Meanwhile, the thermal time constant $\tau$ of a temperature sensor refers to time t required until the temperature of the temperature sensor changes from an initial temperature by 63.2% of the difference between an initial temperature T1 and a final temperature Te. That is, the thermal time constant refers to the time t required to reach 63.2% of the final temperature Te from the initial temperature T1. The equation for acquiring the thermal time constant is as shown in [Equation 1] to [Equation 4] above.

By using the thermal insulation test and the thermal constant acquisition equation described above, the thermal time constant of a temperature sensor mounted on a battery module confirmed to be good may be acquired and stored in the memory unit 221 as a reference thermal time constant. Meanwhile, the reference thermal time constant may be acquired from one temperature sensor or may be acquired from two or more temperature sensors. In order to acquire the reference thermal time constant from a plurality of temperature sensors, the thermal time constant of each of the plurality of temperature sensors may be acquired and then divided by the number of the temperature sensors to obtain an average. Even when the thermal time constant is acquired from a plurality of temperature sensors, the above-described thermal insulation test may be used. The thermal time constant may be acquired from at least one temperature sensor in various ways as described above, and stored in the memory unit 221 as the reference thermal time constant.

S120 : A current thermal time constant is acquired using a thermal time constant acquisition unit 222. That is, the thermal time constant acquisition unit 222 acquires a current thermal time constant, and the current thermal time constant is a thermal time constant of a temperature sensor mounted on a battery pack of an eco-friendly vehicle. In order to acquire the current thermal time constant, the thermal time constant acquisition unit 222 uses the temperature at the time of parking a car, the temperature at the time of starting the engine to operate the car, parking time, and the like. That is, the current thermal time constant is acquired from a temperature sensor mounted on at least one battery module by using a first temperature of a first point of time at which discharge is terminated from a battery of the eco-friendly vehicle, a second temperature at a second point of time at which the discharge is initiated, and time between the first and second points of time. At this time, a method for obtaining a thermal time constant using Equations 1 to 4 may be used to acquire the current thermal time constant. That is, the thermal time constant refers to the time t required to reach 63.2% of the final temperature Te from the initial temperature T1, and if this is applied to the current thermal time constant, the initial temperature T1 is the temperature at the time of parking and the final temperature Te is the temperature at the time of starting the engine, so that the current thermal time constant may be calculated by calculating the time t required reach 63.2% of the temperature at the time of starting the engine from the temperature at the time of parking.

In order to calculate the current thermal time constant, the temperature of a battery module at the time of parking and the temperature of the battery module at the time of starting the engine may be acquired from a temperature sensor mounted on the battery module. In addition, the parking time is the difference in time between the time at which the engine is turned off to the time at which the engine is turned on, which can be obtained from a car controller.

S130 : A comparative determination unit 223 may diagnose the mounting state of a temperature sensor by using the reference thermal time constant and the current thermal time constant. To this end, the comparative determination unit 223 compares the reference thermal time constant with the current thermal time constant. That is, the comparative determination unit 223 retrieves the reference thermal time constant from the memory unit 221 and receives the current thermal time constant from the thermal time constant acquisition unit 222 to compare the reference thermal time constant with the current thermal time constant.

S140 and S150 : When the current thermal time constant is equal to the reference thermal time constant, or the current thermal time constant is not out of a threshold range set from the reference thermal time constant, the comparative determination unit 223 may determine that the temperature sensor is properly mounted on the battery module.

S140 and S150 : However, when the current thermal time constant is not equal to the reference thermal time constant, or the current thermal time constant is out of the threshold range set from the reference thermal time constant, the comparative determination unit 223 may determine that the temperature sensor is poorly mounted on the battery module.

Although the technical spirit of the present invention has been described in detail according to the above embodiment, it should be noted that the above embodiment is for the description thereof, and is not intended to limit the same. In addition, those skilled in the art will understand that various embodiments are possible within the scope of the technical spirit of the present invention.

The names of the symbols used in the drawings and description of the present invention are as follows.

| 100 : | Battery | 200 : | BMS |
|---|---|---|---|
| 300 : | Inverter | 400 : | Motor |
| 500 : | Car controller | 100A : | Battery pack |
| 110 : | Battery module | 210 : | Temperature sensor |
| 220 : | Diagnosis unit | 221 : | Memory unit |
| 222 : | Thermal time constant acquisition unit | 223 : | Comparative determination unit |

**Claims**

1.   A sensor diagnosis method, the sensor diagnosis method comprising:

acquiring a reference thermal time constant from a temperature sensor mounted on at least one reference battery module;
acquiring a current thermal time constant from a temperature sensor mounted on at least one battery module by using a first temperature of a first point of time at which discharge is terminated from a battery of an eco-friendly vehicle, a second temperature at a second point of time at which the discharge is initiated, and time between the first and second points of time; and

comparing the reference thermal time constant with the current thermal time constant and then determining whether the temperature sensor is mounted poorly based on the result of the comparison.

2. The sensor diagnosis method of claim 1, wherein the reference thermal time constant is acquired by conducting a thermal insulation test on at least one reference battery module on which a temperature sensor is mounted and which has been confirmed to be good.

3. The sensor diagnosis method of claim 2, wherein the thermal insulation test is conducted by measuring the time taken for a first temperature of the reference battery module to reach a predetermined second temperature while the reference battery module on which the temperature sensor is mounted is insulated with an insulation material.

4. The sensor diagnosis method of claim 3, wherein the reference thermal time constant is acquired by the following equation by using the first temperature of the reference battery module, the second temperature thereof, and the time taken for the first temperature to reach the second temperature,

$$T = (T1 - Te)exp\left(-\frac{t}{\tau}\right) + Te$$

wherein $\tau$ is a thermal time constant, T1 is a first temperature, Te is a second temperature, t is time taken for the first temperature to reach 63.2% of the second temperature, and T is the temperature at the time t.

5. The sensor diagnosis method of claim 4, wherein the current thermal time constant is acquired by the following equation by using the first temperature of the first point of time at which the discharge is terminated, the second temperature of the second point of time at which the discharge is initiated, and the time between the first and second points of time,

$$T = (T1 - Te)exp\left(-\frac{t}{\tau}\right) + Te$$

wherein $\tau$ is a thermal time constant, T1 is a first temperature of a first point of time, Te is a second temperature of a second point of time, t is time taken for the first temperature to reach 63.2% of the second temperature, and T is the temperature at the time t.

6. The sensor diagnosis method of claim 5, wherein when the current thermal time constant is out of a predetermined threshold range when compared to the reference thermal time constant, it is determined that the temperature sensor is mounted poorly.

7. A sensor diagnosis apparatus, the sensor diagnosis apparatus comprising:

a memory unit configured to store a reference thermal time constant obtained from a temperature sensor mounted on at least one battery module;

a thermal time constant acquisition unit configured to acquire a current thermal time constant from a temperature sensor mounted on at least one battery module by using a first temperature of a first point of time at which discharge is terminated from a battery of an eco-friendly vehicle, a second temperature at a second point of time at which the discharge is initiated, and time between the first and second points of time; and

a comparative determination unit configured to compare the reference thermal time constant with the current thermal time constant and then determine whether the temperature sensor is mounted poorly based on the result of the comparison.

8. The sensor diagnosis apparatus of claim 7, wherein the reference thermal time constant is acquired by conducting a thermal insulation test on at least one reference battery module on which a temperature sensor is mounted and which has been confirmed to be good.

9. The sensor diagnosis apparatus of claim 8, wherein the thermal insulation test is performed by measuring the time required for a first temperature of a battery module to reach a predetermined second temperature while the reference battery module on which the temperature sensor is mounted is insulated with an insulation material.

10. The sensor diagnosis apparatus of claim 9, wherein the reference thermal time constant is obtained by the following equation by using the first temperature of the reference battery module, the second temperature thereof, and the time taken for the first temperature to reach the second temperature,

$$T = (T1 - Te)exp\left(-\frac{t}{\tau}\right) + Te$$

wherein $\tau$ is a thermal time constant, T1 is a first temperature, Te is a second temperature, t is time taken for the first temperature to reach 63.2% of the second temperature, and T is the temperature at the time t.

11. The sensor diagnosis apparatus of claim 10, wherein the thermal time constant acquisition unit acquires the current thermal time constant by the following equation by using the first temperature of the first point of time at which the discharge is terminated, the second temperature of the second point of time at which the discharge is initiated, and the time between the first and second points of time,

$$T = (T1 - Te)exp\left(-\frac{t}{\tau}\right) + Te$$

wherein $\tau$ is a thermal time constant, T1 is a first temperature of a first point of time, Te is a second temperature of a second point of time, t is time taken for the first temperature to reach 63.2% of the second temperature, and T is the temperature at the time t.

12. The sensor diagnosis apparatus of claim 11, wherein when the current thermal time constant is out of a predetermined threshold range of the reference thermal time constant, the comparative determination unit determines that the temperature sensor is mounted poorly.

**Fig. 1**

```
   100              200              300              400
BATTERY ──────── BMS ──────── INVERTER ──────── MOTOR
                  │
                  │
               CAR
            CONTROLLER ──── 500
```

**Fig. 2**

```
      100A                 210
       111                 211
    BATTERY           TEMPERATURE
    MODULE ────────     SENSOR

       112                 212
    BATTERY           TEMPERATURE
    MODULE ────────     SENSOR

       113                 213                  220              500
    BATTERY           TEMPERATURE           DIAGNOSIS          CAR
    MODULE ────────     SENSOR ───────────    UNIT  ──────  CONTROLLER

       114                 214
    BATTERY           TEMPERATURE
    MODULE ────────     SENSOR

       115                 215
    BATTERY           TEMPERATURE
    MODULE ────────     SENSOR
```

**Fig. 3**

TEMPERATURE
SENSOR
210

THERMAL
TIME CONSTANT
ACQUISITION UNIT
222

MEMORY UNIT
221

COMPARATIVE
DETERMINATION
UNIT
223

CAR
CONTROLLER
500

220

**Fig. 4**

TEMPERATURE

PARKING    VEHICLE ON

TEMPERATURE
OF OUTSIDE AIR

PARKING
TIME

TIME

**Fig. 5**

```
┌─────────────────────────────┐
│  ACQUIRE REFERENCE THERMAL  │── S110
│       TIME CONSTANT         │
└─────────────────────────────┘
              │
              ▼
┌─────────────────────────────┐
│   ACQUIRE CURRENT THERMAL   │── S120
│       TIME CONSTANT         │
└─────────────────────────────┘
              │
              ▼
┌─────────────────────────────┐
│    COMPARE REFERENCE AND    │── S130
│ CURRENT THERMAL TIME CONSTANTS│
└─────────────────────────────┘
              │
              ▼         S140                              S150
          ◇─────────────◇            NO      ┌─────────────────────────┐
         ╱ OUT OF THRESHOLD ╲ ───────────────▶│   TEMPERATURE SENSOR    │
         ╲     RANGE?     ╱                   │    PROPERLY MOUNTED     │
          ◇─────────────◇                     └─────────────────────────┘
              │ YES
              ▼
┌─────────────────────────────┐
│     TEMPERATURE SENSOR      │── S160
│      POORLY MOUNTED         │
└─────────────────────────────┘
```

## INTERNATIONAL SEARCH REPORT

| International application No. |
|---|
| **PCT/KR2023/010225** |

**A.    CLASSIFICATION OF SUBJECT MATTER**

**G01K 15/00**(2006.01)i; **G01K 3/10**(2006.01)i; **G01K 1/14**(2006.01)i; **G01M 99/00**(2011.01)i; **H01M 10/48**(2006.01)i

According to International Patent Classification (IPC) or to both national classification and IPC

**B.    FIELDS SEARCHED**

Minimum documentation searched (classification system followed by classification symbols)

G01K 15/00(2006.01); B60L 1/00(2006.01); G01K 7/00(2006.01); G01K 7/25(2006.01); H01M 10/48(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 온도 센서(temperature sensor), 배터리(battery), 열시정수(thermal time constant), 온도(temperature), 및 결함(defect)

**C.    DOCUMENTS CONSIDERED TO BE RELEVANT**

| Category* | Citation of document, with indication, where appropriate, of the relevant passages | Relevant to claim No. |
|---|---|---|
| Y | KR 10-2021-0052009 A (LG CHEM, LTD.) 10 May 2021 (2021-05-10)<br>    See paragraphs [0013] and [0051]-[0102], claim 1, and figures 1-3. | 1-12 |
| Y | CN 113125032 A (UNITED AUTOMOTIVE ELECTRONIC SYSTEMS CO., LTD.) 16 July 2021 (2021-07-16)<br>    See paragraphs [0002] and [0057]-[0063] and figures 1-2. | 1-12 |
| Y | CN 107976265 A (AVIC TIANJIN AVIATION ELECTRO-MECHANICAL CO., LTD.) 01 May 2018 (2018-05-01)<br>    See paragraphs [0051]-[0061] and figures 2a-2b. | 2-6,8-12 |
| A | CN 113324679 A (XINJIANG UYGUR AUTONOMOUS REGION INSTITUTE OF MEASUREMENT & TESTING) 31 August 2021 (2021-08-31)<br>    See paragraphs [0052]-[0110] and figures 1-5. | 1-12 |
| A | JP 2020-174441 A (SUBARU CORP.) 22 October 2020 (2020-10-22)<br>    See paragraphs [0020]-[0053] and figures 1-7. | 1-12 |

☐ Further documents are listed in the continuation of Box C.        ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **25 October 2023** | **25 October 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/010225**

| Patent document cited in search report | | | Publication date (day/month/year) | Patent family member(s) | | | Publication date (day/month/year) |
|---|---|---|---|---|---|---|---|
| KR | 10-2021-0052009 | A | 10 May 2021 | None | | | |
| CN | 113125032 | A | 16 July 2021 | None | | | |
| CN | 107976265 | A | 01 May 2018 | None | | | |
| CN | 113324679 | A | 31 August 2021 | None | | | |
| JP | 2020-174441 | A | 22 October 2020 | JP | 7339757 | B2 | 06 September 2023 |
| | | | | US | 11592343 | B2 | 28 February 2023 |
| | | | | US | 2020-0326245 | A1 | 15 October 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• KR 1020030005954